# EUROPEAN PATENT SPECIFICATION

(11) **EP 3 122 824 B1**
(45) Date of publication and mention of the grant of the patent: **19.08.2020**
(21) Application number: 15768440.8
(22) Date of filing: 06.03.2015
(51) Int. Cl.: C09D 11/10, C09D 133/08, C09D 11/101, C09D 11/322, C09D 11/38

(54) **LOW MIGRATION RADIATION CURABLE INKS**
MIGRATIONSARME STRAHLUNGSHÄRTBARE TINTEN
ENCRES DURCISSABLES AUX RAYONNEMENTS À FAIBLE MIGRATION

(30) Priority: 28.03.2014 US 201461971562 P
(43) Date of publication of application: 01.02.2017
(73) Proprietor: Sun Chemical Corporation, Parsippany, NJ 07054 (US)
(72) Inventor: ILLSLEY, Derek Ronald, Frome Bath BA11 4JB (GB); HALL, Stephen, Wells BA5 2LW (GB); McVEAN, Kirsty, Paulton BS39 7AP (GB); CLEMENTS, Stephen, Radstock BA3 3SU (GB)
(74) Representative: Carpmaels & Ransford LLP
(86) International application number: PCT/US2015/019210
(87) International publication number: WO 2015/148094

(56) References cited:
- EP-A1- 2 671 722
- EP-A1- 2 700 509
- EP-A1- 2 700 509
- EP-A1- 2 796 517
- EP-B1- 1 666 504
- WO-A1-02/081577
- WO-A1-2011/160959
- WO-A1-2013/026451
- US-A1- 2005 037 277

## Description

### FIELD OF THE INVENTION

The present invention is directed to the use of highly alkoxylated monomers or oligomers to increase the degree of monomer conversion during curing so as to result in a reduction of free and unbound monomer which can subsequently migrate into sensitive packaged goods, such as food and pharmaceutical products.

### BACKGROUND OF THE INVENTION

WO2009/053348 describes low migration UV-curable inkjet compositions having a specific blend of mono and difunctional acrylates, along with curable materials having greater than 3 polymerizable groups such as dipentaerythritol penta or hexaacrylates.

In M. Cattaneo et. al., Pitture e Vernici, European Coatings (2002), 78(12-13), 47-52, ethoxylated monomers have been used in low migration UV-curable coating applications as H-transfer co-initiators in combination with type-2 photoinitiators.

WO2013134110 discloses the use of highly alkoxylated monomers, such as ethoxylated trimethylolpropane triacrylate having 15 moles of ethoxylation ("TMP(EO)15TA").

US7037953B2 describes highly alkoxylated monomers such as TMP(EO)15TA, TMP(EO)20TA and polyethylene glycol diacrylates, in the preparation of water-based inks.

PCT/US14/13800 describes the use of difunctional monomers in inks which provide lower levels of unbound monomer and have the potential for producing inks with lower concentrations of photoinitiator.

EP 2 671 722 A1 is directed to radiation curable inkjet inks and industrial inkjet printing methods. The inkjet inks include at least 5wt% of a (meth)acrylated silicone surfactant. EP 2 700 509 A1 is directed to inkjet recording methods where it is said to be possible to obtain a printed material wherein the elution amount to the outside of the components in a cured ink composition is small. WO 2011/160959 A1 describes free radical radiation curable inkjet inks containing a photoinitiator and polymerizable compounds. EP 2 796 517 A1 describes an active light-curable inkjet ink that undergoes sol-gel phase transfer. WO 02/081577 A1 describes a method for producing a solvent resistant, low-extractable, film.

Finally EP 2 399 965 B is directed to scratch resistant radiation curable inkjet inks containing a photoinitiator.

### SUMMARY OF THE INVENTION

The present invention is directed to the use of one or more polymerizable monomers or oligomers having an alkoxylated chain and at least 2 polymerizable groups per molecule, wherein the degree of alkoxylation per polymerizable group is 3 or greater, in a low migration radiation curable ink or coating composition for increasing the degree of monomer conversion during curing of the composition, wherein the composition comprises;
a. between 5 and 30% w/w of the one or more polymerizable monomers or oligomers;
b. between 0.1-7% w/w of one or more photoinitiators;
c. less than 10% w/w of one or more monofunctional monomers;
   wherein the composition comprises one or more type-I photoinitiators and less than 2.0% w/w of any phosphine oxide based photoinitiator.

Also disclosed is a low migration radiation curable ink or coating composition comprising;
a. 5% w/w or greater of one or more polymerizable monomers or oligomers;
b. between 0.1-7% w/w of one or more photoinitiators;
c. less than 10% w/w of one or more monofunctional monomers;
   wherein the polymerizable monomers or oligomers have an alkoxylated chain and at least 2 polymerizable groups per molecule wherein the degree of alkoxylation per polymerizable group is 2 or greater and
   wherein the composition comprises one or more type-I photoinitiators.

Furthermore the present disclosure also provides a method of reducing the amount of migratable monomer in cured ink or coating composition comprising curing an ink or coating composition as mentioned herein above.

Finally the present disclosure provides a process for preparing an article with a coating or an ink printed thereon which comprises applying the ink or coating composition to a surface of an article and curing the composition.

These and other objects, advantages, and features of the invention will become apparent to those persons skilled in the art upon reading the details of the methods and formulations as more fully described below.

### DETAILED DESCRIPTION OF THE INVENTION

It has been found that the use of highly alkoxylated monomers or oligomers increases the degree of monomer conversion during curing so as to result in a reduction of free and unbound monomer which can subsequently migrate into sensitive packaged goods, such as food and pharmaceutical products.

It has also been found that as the degree of alkoxylation increases the amount of unreacted monomer in the cured composition decreases.

The compositions according to the present invention have 5% w/w or greater of polymerizable monomers or oligomers, preferably 10% w/w or greater, more preferably 15% w/w and most preferably 20% w/w or greater of one or more polymerizable monomers or oligomers.

The compositions have between 5 and 30% w/w of one or more polymerizable monomers or oligomers such as between 10 and 25% w/w.

Furthermore the compositions according to the present invention have between 0.1- 7% w/w of one or more photoinitiators, preferably between 0.1-5% w/w and more preferably between 0.1-4% w/w of one or more photoinitiators.

In a particular embodiment the compositions have between 2-7% w/w of one or more photoinitiators and advantageously between 3-6% w/w of one or more photoinitiators

The compositions according to the present invention also have one or more type-I photoinitiators.

Advantageously the compositions have between 3-7% w/w of one or more type-I photoinitiators and preferably between 4-6% w/w of one or more type-I photoinitiators.

Finally the compositions according to the present invention have less than 10% w/w of one or more monofunctional monomers, preferably less than 5% w/w, most preferably less than 2% w/w and are advantageously substantially free of one or more monofunctional monomers.

The monomers or oligomers have an alkoxylated chain and at least two polymerizable groups per molecule wherein the degree of alkoxylation per polymerizable group is 3 or greater and preferably have at least 3 polymerizable groups per molecule.

The monomer or oligomer is typically ethoxylated, propoxylated or butoxylated.

The degree of alkoxylation per polymerizable group is 3 or greater, preferably 4 or greater and most preferably 5 or greater.

The degree of alkoxylation for highly alkoxylated monomers or oligomers such as ethoxylated or propoxylated trimethylolpropane triacrylates (TMPTA), polyethylene glycol diacrylates and polypropylene glycol diacrylates is shown below.

In the case of ethoxylated TMPTA this means that a+b+c in the chemical structure below should be equal to or greater than 9.0.

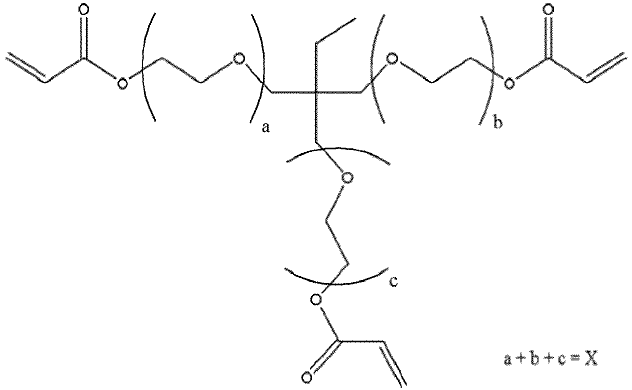

Preferably the polymerizable group is an acrylate, methacrylate, vinyl ether, allyl ether, maleate, fumarate, ethylenic, acrylamide, (meth)acrylamide, or epoxy group. Advantageously the polymerizable group is an acrylate or a methacrylate group.

The alkoxylated monomers or oligomers are usually formed by reacting polyol cores with alkene oxides such as ethylene oxide to produce alkoxylated polyols. These alkoxylated polyols are then subsequently esterified with (meth)acrylic acid to produce the desired alkoxylated monomer/oligomer. For example, trimethylol propane, a trihydric polyol core can be reacted with ethylene oxide to form the ethoxylated polyol derivative. When this is subsequently esterified with acrylic acid the resultant product is the acrylated monomer shown below;

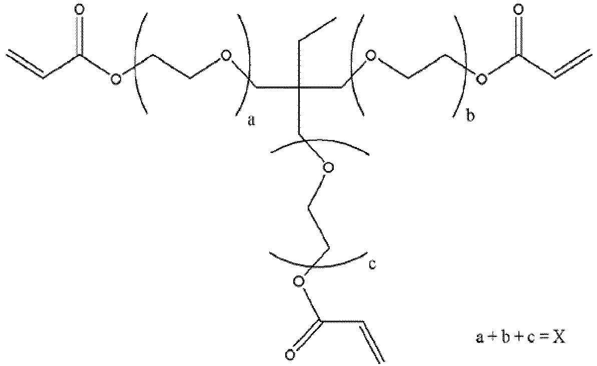

The total degree of ethoxylation for this particular monomer is given by 'x' which is the sum of all the ethoxylation (a+b+c) and the average degree of ethoxylation per acrylate moiety would be x/3. Thus, x/3≥3. It is further preferred that the functionality of the monomer or oligomer with respect to the polymerizable groups is 2 or greater.

The monomer or oligomers are typically selected from (meth)acrylate adducts of ethoxylated, propoxylated or butoxylated derivatives of trimethylol propane, pentaerythritol, dipentaerythritol, neopentyl glycol, glycerol, ethylene glycol, propylene glycol, butanediol, higher alkane diols and sugars such as sucrose. Other alkoxylated monomers include the diacrylates of polyethylene glycol and polypropylene glycol.

Highly alkoxylated oligomers may also include those derived from alkoxylated, and in particular, the ethoxylated derivatives of bisphenol.

Furthermore, the monomers or oligomers may be produced by esterification of (meth)acrylic acid with alkoxylated polyol cores or polyurethane (meth)acrylate oligomers based on highly alkoxylated cores. These types of oligomers, known as polyether urethane acrylates can be prepared, for example, by reacting an alkoxylated polyol core, such as poly(ethylene) glycol, with a diisocyanate such as isophorone diisocyanate and a hydroxyl- functional acrylate, such as hydroxyethyl acrylate.

The monomer or oligomer is advantageously an acrylate adduct of the ethoxylated derivative of trimethylol propane, pentaerythritol, dipentaerythritol, glycerol, neopentyl glycol, ethylene glycol, propylene glycol or bisphenol.

Alternatively the monomer or oligomer is advantageously an acrylate adduct of a propoxylated derivative of trimethylol propane, pentaerythritol, dipentaerythritol, glycerol, neopentyl glycol, ethylene glycol or propylene glycol.

In a preferred embodiment the monomer or oligomer is an ethoxylated or propoxylated trimethylolpropane triacrylate, polyethylene glycol diacrylate or polypropylene glycol diacrylate.

The composition may contain at least one polymeric photoinitiator. However, wherein the composition contains a polymeric photoinitiator, the composition preferably contains less than 3% w/w of polymeric photoinitiator and more preferably less than 2% w/w of polymeric photoinitiator.

The composition may also contain at least one type-II photoinitiator. However, wherein the composition contains a type -II photoinitiator, the composition preferably contains less than 2% w/w of type -II photoinitiator and preferably less than 1% w/w of type-II photoinitiator.

The composition has less than 2.0% of any phosphine oxide based photoinitiator such phenyl bis(2,4,6-trimethylbenzoyl) phosphine oxide and preferably less than 1.0% of any phosphine oxide based photoinitiator.

The photoinitiators used in the compositions according to the present invention are preferably those recognized as having low migration potential which are suitable for the preparation of inks for the printing on the non-contact side of food packaging, as defined by EuPIA's guidelines.

Advantageously, photoinitiators listed in Group 1A and Group 1B of the publication "EuPIA Suitability List of Photo-initiator s for Low Migration UV Printing Inks and Varnishes" are used in the compositions.

In a preferred embodiment the photoinitiators having low migration potential comprise an hydroxyl-ketone group and are advantageously selected from 2-hydroxy-1-[4-(4-(2-hydroxy-2-methylpropionyl)phenoxy)phenyl]-2-methyl propan-1-one, 1-Methylethenyl)benzene homopolymer, ar-(2-hydroxy-2-methyl-1-oxopropyl)derivatives and/or 2-hydroxy-1-(4-(4-(2-hydroxy-2-methylpropionyl)benzyl)phenyl)-2-methylpropan-1-one.

It is also possible to incorporate other non-low migration potential photoinitiators into the compositions of the present invention.

However, if these types of photoinitiators are employed they should be used at less than 2% w/w of the total ink composition, typically less than 1% w/w, preferably less than 0.5% w/w, and most preferably the compositions are substantially free of such photoinitiators.

In particular, any photoinitiators used in the compositions according to the present invention preferably exhibit a migration of less than 10ppb.

Finally the compositions according to the present invention have less that 10% w/w of one or more monofunctional monomers, preferably less than 5% w/w, most preferably less than 2% w/w and are advantageously substantially free of one or more monofunctional monomers.

In addition the highly alkoxylated monomers or oligomers may comprise as part of their chemical structure other polymerizable groups, or blends thereof, such as vinyl ether, allyl ether, maleate, fumarate, ethylenic, acrylamide, (meth)acrylamide, epoxy and any other reactive group that is polymerizable by a free radical or ionic propagation process.

The compositions may contain suitable colorants which include, but are not limited to organic or inorganic pigments and dyes. The dyes include but are not limited to azo dyes, anthraquinone dyes, xanthene dyes, azine dyes, combinations thereof and the like. Organic pigments may be one pigment or a combination of pigments, such as for instance Pigment Yellow Numbers 12,13, 14, 17, 74, 83, 114, 126, 127, 174, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36; Pigment Blue Numbers 15, 15:3, 15:4; Pigment Violet Numbers 3, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired.

The compositions according to the present invention may also contain other components which enable them to perform in their intended purpose. These components include, but are not restricted to; stabilizers, wetting aids, slip agents, inert resins, antifoams, fillers, rheological aids, amine synergists, etc.

The compositions of the present invention may also contain an inert resin such as an acrylic polymer.

Finally the compositions according to the present invention typically have viscosities of less than 12.0mPa.s at 50°C, with colorant (pigments and dyes) concentrations of greater than 2.0% w/w for use as inkjet inks.

The compositions according to the present invention are radiation curing ink or coating compositions that contain reactive groups which react with each other after exposure to energy-rich radiation.

The compositions may be cured using an electron beam (EB) but are preferably cured using ultraviolet light (UV).

Advantageously, the compositions can be UV-cured by an actinic light source, such as UV-light, provided by a high-voltage mercury bulb, a medium-voltage mercury bulb, a xenon bulb, a carbon arc lamp, a metal halide bulb, a UV-LED lamp, a uv laser, such as a semiconductor laser or an eximer laser, or sunlight.

The compositions cure sufficiently well with UV-doses of less than 250 mJ/cm² (medium pressure mercury H-Bulb) such that the level of individual migratable monomer is less than 10ppb when assessed by a set-off food packaging migration test.

The compositions according to the present invention can be applied to the non-food contact surface of food packaging including primary and secondary food packaging. Typically the compositions are applied to the surface of a plastic film, or a paper or paperboard substrate. The plastic film can be any of the following; polyester, polyethylene, polypropylene, polyamide, poly(lactic acid), a cellulose film and any coated or pretreated film thereof.

The plastic film may be of the flexible or rigid type and typically has a thickness of less than or greater than 100µm.

A printed plastic film may subsequently be laminated to a second or more plastic film, to form a printed laminate film suitable for food packaging. A printed paper or paperboard substrate may subsequently be laminated to a second or more plastic film, to form a printed laminate suitable for food packaging.

The ink or coating compositions are typically applied to the articles using inkjet, flexo, gravure, screen, and litho printing.

The state of the art considers that in order to achieve the highest conversion of monomer during curing and thus the lowest level of monomer migratables, the composition must incorporate monomers or oligomers having a high polymerizable group concentration per molecule such as compounds having at least 3 or more polymerizable groups per molecule, such as the penta and hexaacrylated adducts of dipentaerthyritol. This presumes that the higher the concentration of polymerizable group per molecule results in a higher crosslinking density.

However, it has been found that the incorporation of highly ethoxylated trifunctional monomers, such as ethoxylated TMPTA having greater than 6 moles of ethoxylation, into ink or coating compositions can deliver significantly lower levels of unreacted monomer than is achievable with an equivalent weight concentration of dipentaerythritol pentaacrylate, even though the latter composition would have a significantly higher concentration of acrylate groups than a composition containing the highly ethoxylated TMPTA.

Furthermore it has also been found that the incorporation of highly ethoxylated difunctional monomers, such as poly(ethylene glycol) diacrylates can also deliver lower levels of unreacted monomer.

It is believed that the advantages of introducing such monomers or oligomers into the coatings or compositions according to the present invention is that they enable greater segmental mobility (for the polymerizable groups) during the curing process allowing for more residual unsaturated monomer sites that are available for polymerization, leading to higher conversion of the monomers and oligomers in the curing composition. Thus without the highly alkoxylated monomers or oligomers the curing composition reaches a point of virtual 'vitrification' where unreacted monomer groups cannot come into sufficiently close proximity such that they can react with each other.

Where highly functional monomers such as dipentaerythritol pentaacrylate and hexaacrylate are used, it is likely that their incorporation could lead to such a 'vitrified' state at relatively low polymerizable group conversion, even though they themselves might be bound into the cured composition.

Furthermore it has been found that incorporating highly alkoxylated monomers into the compositions according to the present invention allows for lower concentrations of photo initiator which reduces the risk associated with migration of unbound photoinitiator or photoinitiator decomposition products, even where low migration potential photoinitiators are employed.

This is particularly advantageous for UV-inkjet compositions because typically relatively high concentrations of photoinitiators are required to help overcome the effect of oxygen inhibition, which is an endemic problem associated with the UV-curing of inkjet compositions in air. It is quite common for UV-inkjet compositions to contain 8% w/w or more of photoinitiator blends to achieve the desired UV-cure response.

It has been shown that the incorporation of highly ethoxylated monomers allows UV-inkjet compositions to deliver low and acceptable levels of monomer migratables that have 7% or less w/w of a photoinitiator blend.

Furthermore, since printed inkjet films are typically very much thicker than would be the case with flexo, gravure or offset applied inks, then the amount of photoinitiator used per unit area of (food) packaging is even higher. The present invention allows photoinitiator concentrations of 7% w/w or less to be used in the preparation of low migration potential pigmented inkjet compositions.

The examples illustrate that it is possible to achieve low levels of unbound monomer in inkjet compositions with photoinitiator concentrations as low as 6% w/w and even as low as 5% w/w. This can even be achieved for inks which are cured in air wherein for most applications, nitrogen inerting may be preferred during curing, but the inks and coatings of the present invention could be cured either with or without inerting.

The invention is further described by the examples given below.

### EXAMPLES

The following examples illustrate specific aspects of the present invention and are not intended to limit the scope thereof in any respect and should not be so construed.

### INK PREPARATION

The inks were prepared by mixing the pigment dispersion with the ink components using a Silverson type disperser for 20 minutes. The inks were then filtered to remove any oversized particles that might be present in the ink.

### VISCOSITY MEASUREMENTS

The viscosities of the inks were measured using a Brookfield DV-II+ Pro Viscometer equipped with Spindle no.18, at 100rpm.

### CURING THE INKS FOR EXTRACTION/MIGRATION TESTING

The inks were applied to 36µm Melinex S (a polyester film) at 12µm and then cured at 150 mJ/cm², using a Fusion UV Systems UV-Rig equipped with a medium pressure H-bulb. The belt speed was adjusted to deliver the required UV-dose of 150 mJ/cm², as measured by a calibrated International Light Technologies ILT 490 Profiling Belt Radiometer (covering the UV-A and UV-B ranges).

### ASSESSING THE LEVEL OF EXTRACTABLE MONOMER

The level of unbound, unreacted monomer in a print was determined by a 'total extraction' test. This test involved soaking 30cm² of the print in 2ml of methanol, containing 0.025% (w/w) of MEHQ (stabilizer) for 24 hours at room temperature before the methanol solution was analyzed by GC-MS. The GC-MS was calibrated with known solutions of the monomers and photoinitiator products and the results are reported as ppb, the equivalent amount of monomer that would be present in 1Kg of food according to the EU packaging model (where it is assumed that 600cm² of substrate is required to package 1Kg of food) if all the unbound monomer in the print were to migrate into and contaminate the food.

### ASSESSING THE LEVEL OF MIGRATABLE SPECIES

The level of contamination from a print surface was determined by a 'set-off' migration test. This test involved blocking 90cm² of the printed surface to a 30 micron sheet of LDPE (low density poly(ethene)), at 10 tonnes for a period of 72 hours at room temperature and then for a further period of 10 days at 40°C under a load of 5Kg. The poly(ethene) film was then extracted into 2ml of methanol, containing 0.025% (w/w) of MEHQ (stabilizer) for 24 hours before the methanol solution was analyzed by GC-MS. Similarly, the results are reported as ppb, the amount of migratable material that would be present in 1Kg of food according to the EU packaging model, where it is assumed that 600cm² of substrate is required to package 1Kg of food.

### THE EFFECT OF INTRODUCING A HIGHLY ALKOXYLATED MONOMER INTO A UV-CURABLE INKJET COMPOSITION

Inks (Comparative Examples 1 to 5 and Inventive Example 1) were prepared with compositions according to the following:

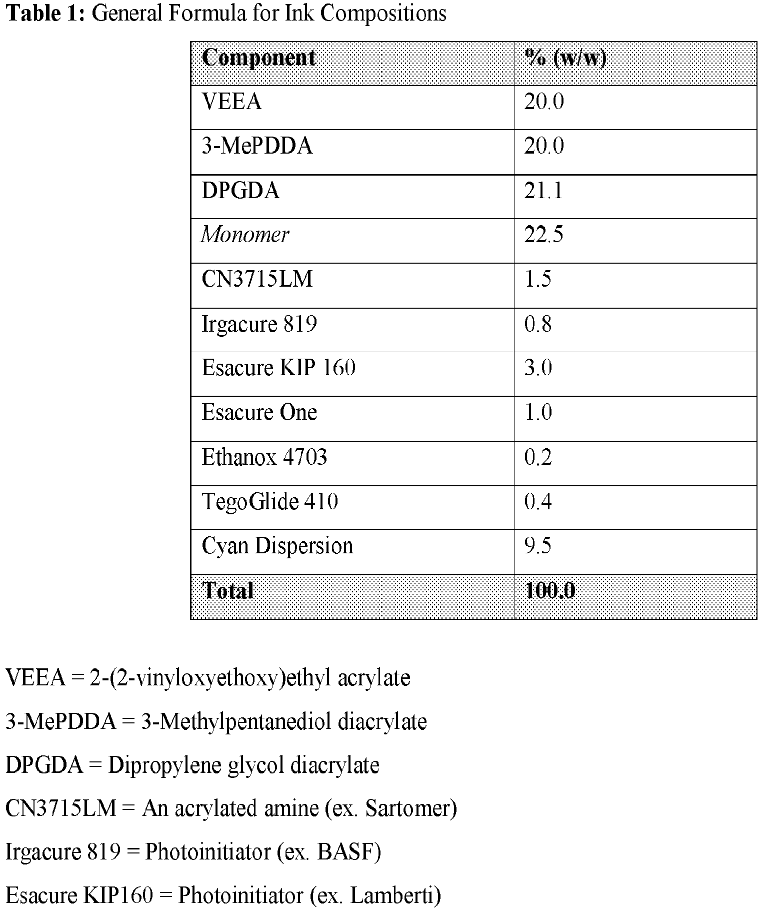

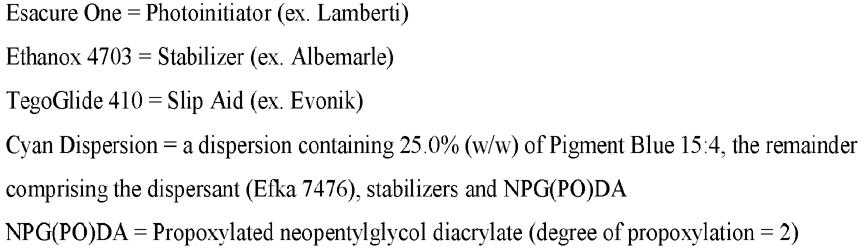

Table 2 provides the details of the monomers used in the preparation of Comparative Examples 1 to 5 and the monomer used in Inventive Example 1. It also provides the results for the amounts of extractable DPGDA, 3-MePDDA and VEEA present in ink films cured at 150 mJ/cm² according to the description provided above.

**Table 2: Monomer Selection and Level of Extractable Monomer from Cured Ink Films**

| **Example & Viscosity at 45°C (mPa.s)** | **Monomer** | **Extractable DPGDA (ppb)** | **Extractable 3-MePDDA (ppb)** | **Extractable VEEA (ppb)** |
|---|---|---|---|---|
| Comparative Example 1 (12.1) | DiPentaerythritol Pentaacrylate | 121 | 170 | 64 |
| Comparative Example 2 (8.1) | Ethoxylated Trimethylolpropane triacrylate (3 moles of ethoxylation) | 355 | 295 | 90 |
| Comparative Example 3 (8.4) | Propoxylated Trimethylolpropane triacrylate (3 moles of propoxylation) | 215 | 192 | 94 |
| Comparative Example 4 (8.4) | Propoxylated Glyceryl triacrylate (3 moles of propoxylation) | 162 | 143 | 37 |
| Comparative Example 5 (9.5) | Ethoxylated pentaerythritol tetraacrylate (4 moles of ethoxylation) | 145 | 176 | 64 |
| Inventive Example 1 (11.1) | Trimethylolpropane triacrylate (15 moles of ethoxylation) | 33 | 35 | 26 |

Table 2 shows that Inventive Example 1, having the ethoxylated trimethylolpropane triacrylate having a degree of ethoxylation of 15, is much more effective than the other monomers in delivering low levels of extractable monomer from cured ink films. It is significantly more effective than the pentaacrylate adduct of dipentaerythritol (Comparative Example 1) and also more effective than the ethoxylated trimethylolpropane adduct having a degree of total ethoxylation of 3 (Comparative Example 2). This latter monomer is one commonly used in the preparation of radiation-curable inks and it would be expected according to the state of the art that due to its higher acrylate density to deliver lower levels of extractable monomer from a cured ink film than would the analogous monomer having around 15 moles of total ethoxylation. The comparable theoretical molecular weights for these two monomers are 428 g/mole and 956 g/mole respectively.

### THE INFLUENCE OF THE DEGREE OF ALKOXYLATION ON THE LOWERING OF EXTRACTABLE MONOMER FROM UV-CURED INK FILMS

Inventive Example 1 demonstrates the advantage of incorporating a highly alkoxylated monomer into a radiation-curable ink intended for low migration applications. Comparative Examples 6 and 7 and Inventive Examples 2 and 3, along with Comparative Example 2 show that it is preferable that the degree of alkoxylation, in this case the degree of ethoxylation on a trimethylolpropane core, should preferably be greater than 2, on average, per acrylate moiety. These examples were prepared according to the ink composition provided above. Table 3 provides the results for the levels of monomer extracted from ink films cured at 150 mJ/cm².

**Table 3: The Effect of Degree of Alkoxylation on Extractable Monomer**

| **Example & Viscosity at 45° (mPa.s)** | **Total Degree of Ethoxylation (n) of Trimethylolpropane triacrylate (TMP(EO)nTA) and average degree of ethoxylation per acrylate moiety** | **Extractable DPGDA (ppb)** | **Extractable 3-MePDDA (ppb)** | **Extractable VEEA (ppb)** |
|---|---|---|---|---|
| Comparative Example 6 (8.7) | 0 (0) | 790 | 617 | 216 |
| Comparative Example 2 (8.1) | 3 (1) | 355 | 295 | 90 |
| Comparative Example 7 (9.0) | 6 (2) | 895 | 720 | 360 |
| Inventive Example 2 (9.8) | 9 (3) | 117 | 151 | 93 |
| Inventive Example 1 (11.1) | 15 (5) | 33 | 35 | 26 |
| Inventive Example 3 (12.7) | 20 (6.7) | 25 | 24 | 24 |

Inventive Examples 1 to 3 show that a degree of ethoxylation per acrylate moiety in excess of 2 (i.e. a total degree of ethoxylation in excess of 6 for ethoxylated trimethylolpropane triacrylate) induce a significant reduction in the amount of unbound, unreacted monomer which is extractable from a cured ink film. The extent by which the level of extractable monomer decreases when moving from a degree of ethoxylation per acrylate moiety of 2 to 3 is particularly pronounced.

### THE EFFECT OF THE CONCENTRATION OF A HIGHLY ALKOXYLATED MONOMER IN A UV-CURABLE INKJET COMPOSITION

To demonstrate the effect of the concentration of highly alkoxylated monomer in a radiation-curable ink/coating required to induce the lowering of extractable monomer from a cured ink/coating film, the following inkjet ink compositions were prepared. The inks were cured according to the above, at 150 mJ/cm², and the amount of extractable monomer determined.

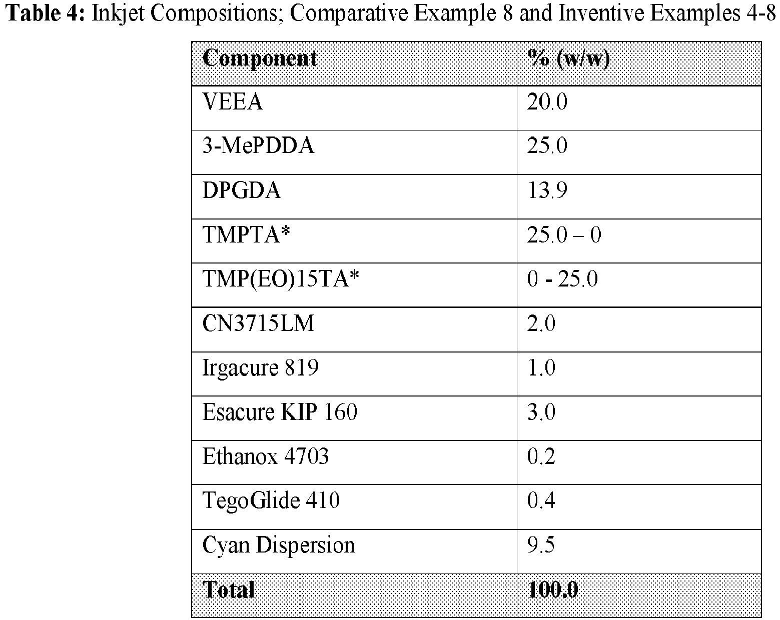

Comparative Example 8 and Inventive Examples 4-8 all contain a total of 25% (w/w) of either trimethylolpropane triacrylate (TMPTA) or ethoxylated trimethylolpropane triacrylate with a total degree of ethoxylation of 15 (TMP(EO)15TA), or a blend of the two. The actual amount of TMP(EO)15TA is shown in Table 5 with the balance to total 25% being TMPTA.

Table 5 shows the amount of monomer extracted from ink films cured at 150 mJ/cm². In this series of experiments the amount of extracted NPG(PO)DA is also provided to further demonstrate the effect that the introduction of highly alkoxylated monomers has in lowering the amount of unbound monomer in UV-cured inkjet films after extraction into methanol.

**Table 5: The Effect of Concentration of TMP(EO)15TA in a UV-Inkjet Composition on Lowering the Amount of Unbound, Extractable Monomer**

| **Example & Viscosity at 45°C (mPa.s)** | **Concentration of TMP(EO)15TA (%) (w/w))** | **Extractable NPG(PO)DA (ppb)** | **Extractable DPGDA (ppb)** | **Extractable 3-MePDDA (ppb)** | **Extractable VEEA (ppb)** |
|---|---|---|---|---|---|
| Comparative Example 8 (8.8) | 0 | 1775 | 380 | 715 | 110 |
| Inventive Example 4 (9.1) | 5 | 650 | 132 | 252 | 34 |
| Inventive Example 5 (9.7) | 10 | 230 | 41 | 63 | 14 |
| Inventive Example 6 (10.5) | 15 | 155 | 17 | 29 | 7 |
| Inventive Example 7 (10.9) | 20 | 50 | 6 | 7 | 3 |
| Inventive Example 8 (11.6) | 25 | 94 | 9 | 19 | 6 |

The results in Table 5 indicate that even a small addition of a highly alkoxylated monomer can significantly reduce the amount of unbound monomer which can be extracted from a UV-cured inkjet film. When the concentration of the TMPTA analogue having the equivalent of 15 moles of ethoxylation is 10% (w/w) or greater, a reduction in extractable monomer of around 90% is achievable.

### INKJET INKS COMPRISING POLY(ETHYLENE GLYCOL) DIACRYLATE (PEGDA)

The examples provided thus far are based on the highly ethoxylated derivatives of trimethylolpropane triacrylate. To demonstrate that the effect is also achievable using monomers of lower functionality, a series of white inks comprising PEGDAs having PEG cores of different molecular weight were prepared according to the following composition. Two comparative examples were also prepared; the first where the PEGDA component was replaced with a 50/50 blend of DPGDA and 3-MePDDA and a second where decandioldiacrylate was used in place of the PEGDA component.

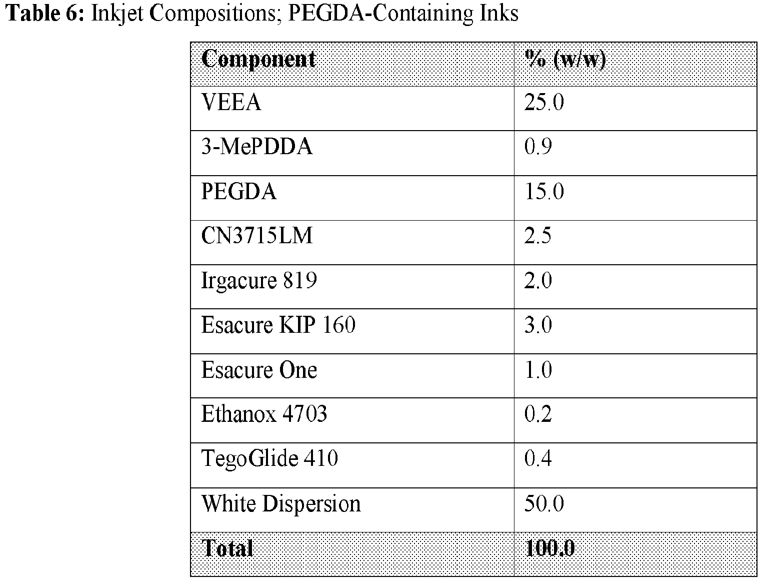

A white dispersion is a dispersion containing 50.0% (w/w) of titanium dioxide pigment, the remainder comprising the dispersant (Efka 7476), stabilizers and DPGDA.

Table 7 provides the results for the methanol extraction of 12 micron films of these white inks cured under the action of a medium pressure mercury UV-lamp at 150 mJ/cm².

**Table 7: PEGDA-Containing Inks; Levels of Extracted Monomer**

| **Example & Viscosity at 45°C (mPa.s)** | **PEGDA Type (and average degree of ethoxylation per acrylate moiety)** | **Extractable DPGDA (ppb)** | **Extractable 3-MePDDA (ppb)** | **Extractable VEEA (ppb)** |
|---|---|---|---|---|
| Comparative Example 9 (7.5) | 3-MePDDA/DPGDA (0) | 580 | 255 | 395 |
| Example 10 Comparative (7.4) | Decanediol Diacrylate (0) | 146 | 3.1 | 265 |
| Comparative Example 14 (8.6) | PEG200DA (2.3) | 68.3 | <1.0 | 120 |
| Inventive Example 10 (9.4) | PEG300DA (3.4) | 46.1 | <1.0 | 69 |
| Inventive Example 11 (10.5) | PEG400DA (4.5) | 34 | <1.0 | 85 |
| Inventive Example 12 (11.5) | PEG600DA (6.8) | 22 | <1.0 | 52 |

The results in Table 7 show that introducing PEGDA into a white UV-curable inkjet composition reduces the amount of unbound, unreacted monomer in a UV-cured film as evidenced by the amount of monomer that can be extracted into methanol. The amount of extractable monomer from UV-cured ink films decreases with increasing chain length of the poly(ethylene glycol) core of the PEGDA, with PEG300DA, PEG400DA and PEG600DA being significantly better than PEG200DA.

In a further experiment, Inventive Example 10 was reformulated but the concentration of the PEG300DA was increased to 17.5% (w/w) and the concentration of the white dispersion decreased to 47.5% (w/w) to make Inventive Example 13. This change had minimal impact on the opacity of the cured ink film but produced an ink which when cured under the same conditions and tested for extractable monomer produced the following levels; DPGDA = 13.5ppb, 3-MePDDA = <1.0ppb, VEEA = 28.9ppb.

### Inks having Reduced Concentrations of Photoinitiator

Incorporating highly alkoxylated monomers/oligomers into radiation-curable inks/coatings allows lower concentrations of photoinitiators to be used than would otherwise be possible. To demonstrate this, cyan inkjet ink compositions were prepared with 3.0, 2.0 and 0.8% Irgacure 819 according to the compositions in Table 8. Two inks demonstrating the invention containing 22.5% of TMP(EO)15TA and 0.8 and 1.2% of Irgacure 819 were also prepared. 12 micron ink films of these compositions were cured at 150 mJ/cm² and the level of extractable monomer determined. Also determined in these examples was the amount of extractable mesitaldehyde, which is a photodecomposition by-product from the phosphine oxide photoinitiator, Irgacure 819.

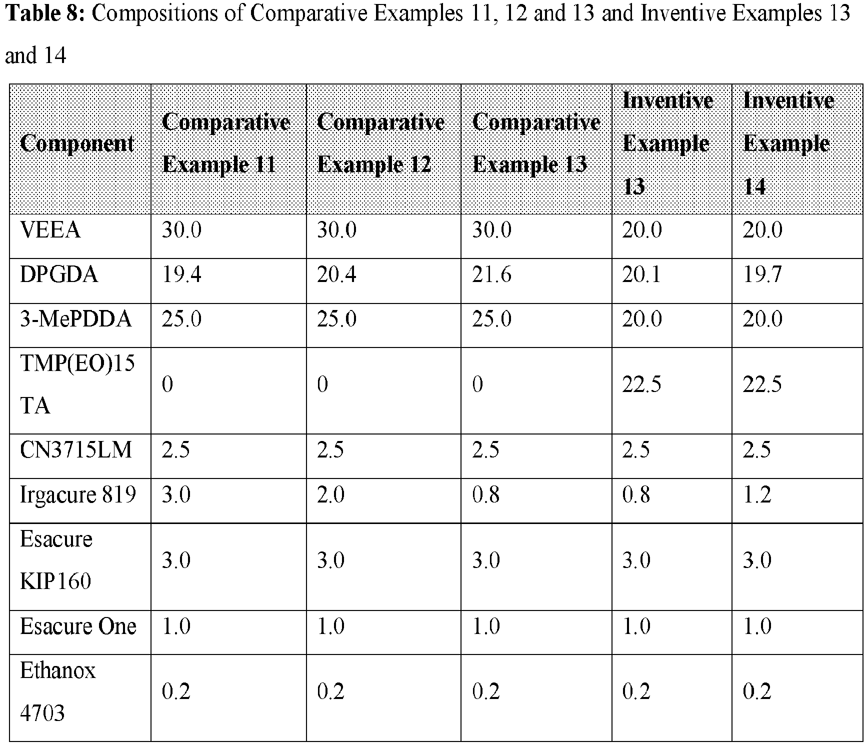

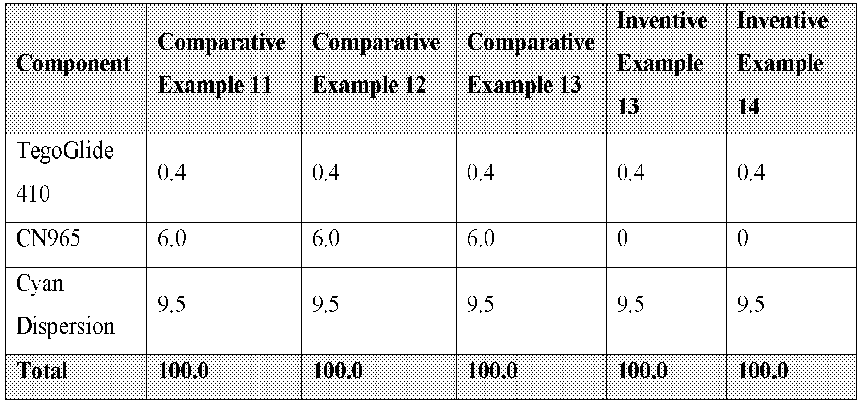

CN965 is an aliphatic urethane diacrylate (ex. Sartomer)

Table 9 provides the results for the extraction test carried out on 12 micron films of these inks cured at 150 mJ/cm².

**Table 9: Level of Extractable Monomers and Photoinitiator from Cured Films of Comparative Examples 11, 12 and 13 and Inventive Examples 13 and 14**

| **Example** | **Extractable NPG(PO)DA (ppb)** | **Extractable DPGA (ppb)** | **Extractable 3-MePDDA (ppb)** | **Extractable VEEA (ppb)** | **Extractable Mesitaldehyde (ppb)** |
|---|---|---|---|---|---|
| Comparative Example 11 | 5 | 3 | 4 | 12 | 128 |
| Comparative Example 12 | 24 | 40 | 39 | 19 | 67 |
| Comparative Example 13 | 1920 | 3350 | 1925 | 880 | 41 |
| Inventive Example 13 | 34 | 9 | 5 | 4 | 33 |
| Inventive Example 14 | 8 | 3 | 3 | 2 | 57 |

The results provided in Table 9 demonstrate that at the same photoinitiator level, the compositions according to the present invention can produce lower levels of unbound, unreacted monomer in UV-cured films compared with the comparative examples. This has the benefit of optionally being able to reduce the amount of photoinitiator and hence any photodecomposition by-products available for migration

Thus, it is possible to achieve low migration potential UV-curable inkjet compositions with total concentrations of photoinitiator of 6% (w/w) or less, a further advantage over the prior art.

It is also possible to prepare inks according to the current invention which comprise polymeric photo initiators in conjunction with Type-I photoinitiators. Table 10 provides the compositions for 2 inks comprising alkoxylated monomers according to the current invention, along with a polymeric photoinitiator, Omnipol TX (ex. IGM). Table 10 also provides the results for the extraction test, previously described (the UV-dose in this instance was 200 mJ/cm²).

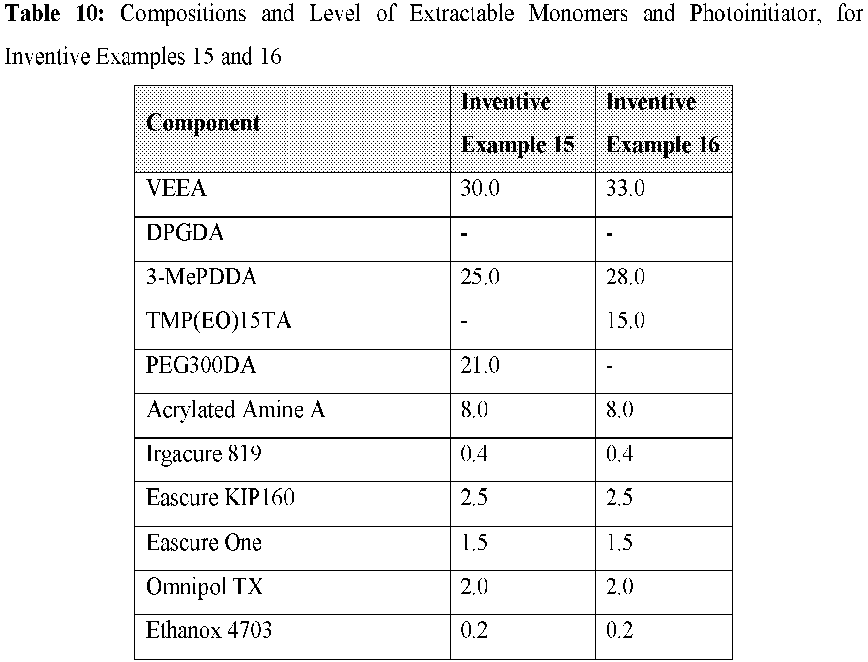

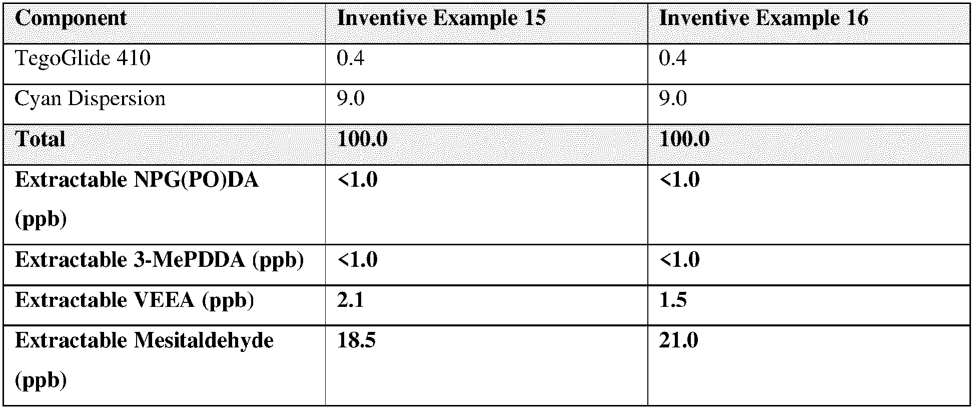

The viscosities of these two inks measured at 45°C, were 9.5 and 10.6 mPa.s respectively. Acrylated Amine A is a proprietary acrylated amine.

Inventive Examples 15 and 16 show that it is possible to achieve low migration potential UV-curable inkjet compositions comprising polymeric type II photoinitiators and low migration potential type-I photoinitators, with total concentration of photoinitiator of 7% (w/w) or less.

The present invention has been described in detail, including the preferred embodiments thereof.

## Claims

1. Use of one or more polymerizable monomers or oligomers having an alkoxylated chain and at least 2 polymerizable groups per molecule, wherein the degree of alkoxylation per polymerizable group is 3 or greater, in a low migration radiation curable ink or coating composition for increasing the degree of monomer conversion during curing of the composition,
wherein the composition comprises;
a. between 5 and 30% w/w of the one or more polymerizable monomers or oligomers;
b. between 0.1-7% w/w of one or more photoinitators;
c. less than 10% w/w of one or more monofunctional monomers;
wherein the composition comprises one or more type-I photoinitiators and less than 2.0% w/w of any phosphine oxide based photoinitiator.

2. A use according to claim 1 wherein the composition has between 10 and 25% w/w of said one or more polymerizable monomers or oligomers.

3. A use according to any one of the preceding claims wherein the composition has between 1-7% w/w of photoinitiator, optionally having between 2-7% w/w of photoinitiator

4. A use according to any one of the preceding claims wherein the composition has between 3-7% w/w, optionally between 4-6% w/w of one or more type-I photoinitiators.

5. A use according to any one of the preceding claims wherein the monomers or oligomers have at least 3 polymerizable groups per molecule.

6. A use according to any one of the preceding claims wherein the degree of alkoxylation per polymerizable group is 4 or greater, optionally 5 or greater.

7. A use according to any one of the preceding claims wherein the polymerizable group is an acrylate, methacrylate, vinyl ether, allyl ether, maleate, fumarate, ethylenic, acrylamide, (meth)acrylamide, or epoxy group, optionally an acrylate or a methacrylate group .

8. A use according to any one of the preceding claims wherein the polymerizable monomer or oligomer is ethoxylated, propoxylated or butoxylated, optionally wherein:
i) the polymerizable monomer or oligomer is an acrylate adduct of the ethoxylated derivative of trimethylol propane, pentaerythritol, dipentaerythritol, glycerol, neopentyl glycol, ethylene glycol, propylene glycol or bisphenol, or
ii) the polymerizable monomer or oligomer is an acrylate adduct of a propoxylated derivative of trimethylol propane, pentaerythritol, dipentaerythritol, glycerol, neopentyl glycol, ethylene glycol or propylene glycol, or
iii) the polymerizable monomer is an ethoxylated or propoxylated trimethylolpropane triacrylate, polyethylene glycol diacrylate or polypropylene glycol diacrylate.

9. A use according to any one of the preceding claims wherein said composition comprises a polymeric photoinitiator, optionally wherein said composition contains less than 3% w/w of polymeric photoinitiator, optionally less than 2% w/w of polymeric photoinitiator.

10. A use according to any one of the preceding claims wherein said composition comprises a type II photoinitiator, optionally wherein said composition contains less than 1% w/w of type II photoinitiator.

11. A use according to any one of the preceding claims wherein the composition comprises less than 1.0% of any phosphine oxide based photoinitiator, and/or wherein the phosphine oxide photoinitiator is phenyl bis(2,4,6-trimethylbenzoyl) phosphine oxide.

12. A use according to any one of the preceding claims wherein said composition comprises less than 5% w/w, optionally less than 2% w/w, of one or more monofunctional monomers, optionally wherein said composition is substantially free of monofunctional monomers.

13. A use according to any one of the preceding claims wherein the composition is UV curable.

14. A use according to any one of the preceding claims wherein the composition is a printing ink, optionally wherein the printing ink is an inkjet ink.

## Patentansprüche

1. Verwendung von einem oder mehreren polymerisierbaren Monomeren oder Oligomeren mit einer alkoxylierten Kette und mindestens 2 polymerisierbaren Gruppen je Molekül, wobei der Alkoxylierungsgrad je polymerisierbarer Gruppe 3 oder mehr beträgt, zur Erhöhung des Monomerumsatzgrads bei einer migrationsarmen strahlungshärtbaren Tinten- oder Beschichtungszusammensetzung während der Härtung der Zusammensetzung,
wobei die Zusammensetzung Folgendes umfasst:
a. zwischen 5 und 30 % w/w des einen oder der mehreren polymerisierbaren Monomere oder Oligomere;
b. zwischen 0,1-7 % w/w eines oder mehrerer Photoinitiatoren;
c. weniger als 10 % w/w eines oder mehrerer monofunktioneller Monomere;
wobei die Zusammensetzung einen oder mehrere Photoinitiatoren vom Typ 1 und weniger als 2,0 % w/w eines beliebigen Photoinitiators auf Basis von Phosphinoxid umfasst.

2. Verwendung nach Anspruch 1, wobei die Zusammensetzung zwischen 10 und 25 % w/w des einen oder der mehreren polymerisierbaren Monomere oder Oligomere aufweist.

3. Verwendung nach einem der vorhergehenden Ansprüche, wobei die Zusammensetzung zwischen 1-7 % w/w Photoinitiator aufweist, gegebenenfalls zwischen 2-7 % w/w Photoinitiator aufweist.

4. Verwendung nach einem der vorhergehenden Ansprüche, wobei die Zusammensetzung zwischen 3-7 % w/w, gegebenenfalls zwischen 4-6 % w/w, eines oder mehrerer Photoinitiatoren vom Typ 1 aufweist.

5. Verwendung nach einem der vorhergehenden Ansprüche, wobei die Monomere oder Oligomere mindestens 3 polymerisierbare Gruppen je Molekül aufweisen.

6. Verwendung nach einem der vorhergehenden Ansprüche, wobei der Alkoxylierungsgrad je polymerisierbarer Gruppe 4 oder mehr, gegebenenfalls 5 oder mehr, beträgt.

7. Verwendung nach einem der vorhergehenden Ansprüche, wobei es sich bei der polymerisierbaren Gruppe um eine Acrylat-, Methacrylat-, Vinylether-, Allylether-, Maleat-, Fumarat-, Ethylen-, Acrylamid-, (Meth)acrylamid- oder Epoxygruppe, gegebenenfalls eine Acrylat- oder eine Methacrylatgruppe, handelt.

8. Verwendung nach einem der vorhergehenden Ansprüche, wobei das polymerisierbare Monomer oder Oligomer ethoxyliert, propoxyliert oder butoxyliert ist, gegebenenfalls wobei:
i) es sich bei dem polymerisierbaren Monomer oder Oligomer um ein Acrylataddukt des ethoxylierten Derivats von Trimethylolpropan, Pentaerythrit, Dipentaerythrit, Glycerin, Neopentylglykol, Ethylenglykol, Propylenglykol oder Bisphenol handelt oder
ii) es sich bei dem polymerisierbaren Monomer oder Oligomer um ein Acrylataddukt eines propoxylierten Derivats von Trimethylolpropan, Pentaerythrit, Dipentaerythrit, Glycerin, Neopentylglykol, Ethylenglykol oder Propylenglykol handelt oder
iii) es sich bei dem polymerisierbaren Monomer um ein ethoxyliertes oder propoxyliertes Trimethylolpropantriacrylat, Polyethylenglykoldiacrylat oder Polypropylenglykoldiacrylat handelt.

9. Verwendung nach einem der vorhergehenden Ansprüche, wobei die Zusammensetzung einen polymeren Photoinitiator umfasst, wobei die Zusammensetzung gegebenenfalls weniger als 3 % w/w polymeren Photoinitiator, gegebenenfalls weniger als 2 % w/w polymeren Photoinitiator, enthält.

10. Verwendung nach einem der vorhergehenden Ansprüche, wobei die Zusammensetzung einen Photoinitiator vom Typ II umfasst, wobei die Zusammensetzung gegebenenfalls weniger als 1 % w/w Photoinitiator vom Typ II enthält.

11. Verwendung nach einem der vorhergehenden Ansprüche, wobei die Zusammensetzung weniger als 1,0 % eines beliebigen Photoinitiators auf Basis von Phosphinoxid umfasst und/oder wobei es sich bei dem Photoinitiator auf Basis von Phosphinoxid um Phenylbis(2,4,6-trimethylbenzoyl)phosphinoxid handelt.

12. Verwendung nach einem der vorhergehenden Ansprüche, wobei die Zusammensetzung weniger als 5 % w/w, gegebenenfalls weniger als 2 % w/w, eines oder mehrerer monofunktioneller Monomere umfasst, wobei die Zusammensetzung gegebenenfalls weitgehend frei von monofunktionellen Monomeren ist.

13. Verwendung nach einem der vorhergehenden Ansprüche, wobei die Zusammensetzung UV-härtbar ist.

14. Verwendung nach einem der vorhergehenden Ansprüche, wobei es sich bei der Zusammensetzung um eine Drucktinte handelt, wobei es sich bei der Drucktinte gegebenenfalls um eine Tintenstrahltinte handelt.

## Revendications

1. Utilisation d'un ou plusieurs monomères ou oligomères polymérisables renfermant une chaîne alcoxylée et au moins 2 groupes polymérisables par molécule, dans laquelle le degré d'alcoxylation par groupe polymérisable est supérieur ou égal à 3, dans une composition d'encre ou de revêtement durcissable par un rayonnement à faible migration pour l'augmentation du degré de conversion de monomères pendant le durcissement de la composition,
dans laquelle la composition comprend :
a. entre 5 et 30 % p/p du ou des monomères ou oligomères polymérisables ;
b. entre 0,1 et 7 % p/p d'un ou plusieurs photoinitiateurs ;
c. moins de 10 % p/p d'un ou plusieurs monomères monofonctionnels ;
dans laquelle la composition comprend un ou plusieurs photoinitiateurs de type I et moins de 2,0 % p/p d'un quelconque photoinitiateur à base d'oxyde de phosphine.

2. Utilisation selon la revendication 1 dans laquelle la composition renferme entre 10 et 25 % p/p dudit ou desdits monomères ou oligomères polymérisables.

3. Utilisation selon l'une quelconque des revendications précédentes dans laquelle la composition renferme entre 1 et 7 % p/p de photoinitiateur, éventuellement renfermant entre 2 et 7 % p/p de photoinitiateur.

4. Utilisation selon l'une quelconque des revendications précédentes dans laquelle la composition renferme entre 3 et 7 % p/p, éventuellement entre 4 et 6 % p/p d'un ou plusieurs photoinitiateurs de type I.

5. Utilisation selon l'une quelconque des revendications précédentes dans laquelle les monomères ou oligomères renferment au moins 3 groupes polymérisables par molécule.

6. Utilisation selon l'une quelconque des revendications précédentes dans laquelle le degré d'alcoxylation par groupe polymérisable est supérieur ou égal à 4, éventuellement supérieur ou égal à 5.

7. Utilisation selon l'une quelconque des revendications précédentes dans laquelle le groupe polymérisable est un groupe acrylate, méthacrylate, éther vinylique, éther allylique, maléate, fumarate, éthylénique, acrylamide, (méth)acrylamide ou époxy, éventuellement un groupe acrylate ou méthacrylate.

8. Utilisation selon l'une quelconque des revendications précédentes dans laquelle le monomère ou oligomère polymérisable est éthoxylé, propoxylé ou butoxylé, éventuellement dans laquelle :
i) le monomère ou oligomère polymérisable est un adduit d'acrylate et du dérivé éthoxylé de triméthylolpropane, de pentaérythritol, de dipentaérythritol, de glycérol, de néopentylglycol, d'éthylèneglycol, de propylèneglycol ou de bisphénol ou
ii) le monomère ou oligomère polymérisable est un adduit d'acrylate et d'un dérivé propoxylé de triméthylolpropane, de pentaérythritol, de dipentaérythritol, de glycérol, de néopentylglycol, d'éthylèneglycol ou de propylèneglycol ou
iii) le monomère polymérisable est un triacrylate de triméthylolpropane, diacrylate de polyéthylèneglycol ou diacrylate de polypropylèneglycol éthoxylé ou propoxylé.

9. Utilisation selon l'une quelconque des revendications précédentes dans laquelle ladite composition comprend un photoinitiateur polymère, éventuellement dans laquelle ladite composition contient moins de 3 % p/p de photoinitiateur polymère, éventuellement moins de 2 % p/p de photoinitiateur polymère.

10. Utilisation selon l'une quelconque des revendications précédentes dans laquelle ladite composition comprend un photoinitiateur de type II, éventuellement dans laquelle ladite composition contient moins de 1 % p/p de photoinitiateur de type II.

11. Utilisation selon l'une quelconque des revendications précédentes dans laquelle la composition comprend moins de 1,0 % d'un quelconque photoinitiateur à base d'oxyde de phosphine et/ou dans laquelle le photoinitiateur oxyde de phosphine est l'oxyde de phénylbis(2,4,6-triméthylbenzoyl)phosphine.

12. Utilisation selon l'une quelconque des revendications précédentes dans laquelle ladite composition comprend moins de 5 % p/p, éventuellement moins de 2 % p/p, d'un ou plusieurs monomères monofonctionnels, éventuellement dans laquelle ladite composition est pratiquement exempte de monomères monofonctionnels.

13. Utilisation selon l'une quelconque des revendications précédentes dans laquelle la composition est durcissable par des UV.

14. Utilisation selon l'une quelconque des revendications précédentes dans laquelle la composition est une encre d'impression, éventuellement dans laquelle l'encre d'impression est une encre pour jet d'encre.
